Europäisches Patentamt

**European Patent Office**

**Office européen des brevets**

(11) Publication number: **0 177 325**
**A2**

# (12) EUROPEAN PATENT APPLICATION

(21) Application number: **85306987.0**

(51) Int. Cl.⁴: **G 07 F 7/10**

(22) Date of filing: **01.10.85**

(30) Priority: **04.10.84 GB 8425147**

(43) Date of publication of application:
**09.04.86 Bulletin 86/15**

(84) Designated Contracting States:
**AT BE CH DE FR GB IT LI LU NL SE**

(71) Applicant: **RIGBY ELECTRONICS GROUP PLC.**
**Royal Oak Trading Estate Hilton Square**
**Pendlebury Manchester, M27 1DL(GB)**

(72) Inventor: **Rigby, Brian**
**45 Crossfield Drive**
**Worsley Manchester, M27 4QQ(GB)**

(72) Inventor: **Rigby, Haydn Martin**
**9 Fairybank Road Hayfield**
**Near Stockport Derbyshire, SK12 5NE(GB)**

(74) Representative: **Downey, William Gerrard et al,**
**WILSON, GUNN, ELLIS & CO. 41 Royal Exchange Cross**
**Street**
**Manchester M2 7BD(GB)**

(54) **A device for and method of reading from a substrate.**

(57) A substrate such as a transaction card C whether for cash or goods carries one of a pair of algorithm generated numbers. This may be read from the card and fed to signal processing circuitry S. The other number of the pair, normally a personal identity number PIN is fed into the circuitry from a keyboard. The circuitry processes the two numbers in accordance with the algorithm to give a result which is compared with a third piece of information which may also be written on the card C. If the comparison is correct, a valid signal issues. The algorithm may be implemented in the circuitry by shift registers SR1, SR2.

FIG.3

A DEVICE FOR AND METHOD OF READING

FROM A SUBSTRATE

The present invention relates to a device for, and method of reading from a substrate such as a credit card. The invention also comprises the substrate itself.

At the present time a personal identification number (PIN) is used in conjunction with a credit card to obtain cash and cash related documentation from bank cash dispensers and the like. The dispenser is normally linked to a central data base which is accessed prior to a transaction, usually to see if the card being used has been stolen and/or to see that the relevant account is credit worthy. Such a system can be used with a stand alone terminal, but then the security provided by the remote data base is lost. The PIN may be read from the card and/or copied to a fraudulently produced card and cash and or services obtained fraudulently.

According to one aspect of the present invention, there is provided a device for reading from a substrate comprising a head, means for processing signals read from or written to the head, and means for enabling an operator to introduce a signal to the processing means, said means for processing signals being operative to process a signal received from the head and a signal received from the operator and to produce therefrom a card valid or a card not valid signal.

-2-

According to another aspect of the the present invention, there is provided a method of operating a device for reading a substrate to validate the substrate including the steps of reading one of a pair of algorithm. related numbers on the substrate by means of a reading head in the device, keying into the device the other number of the pair processing the two numbers in accordance with the algorithm, and comparing the result with the desired result to determine substrate validity.

The invention also comprises a substrate bearing one of a pair of numbers related by means of the algorithm.

In one form of the apparatus, the signal received from the head and that received from the operator represent the numbers of a pair related by and forming the solution to an algorithm. These signals are processed using the algorithm to provide a signal which is then compared with the desired signal held in memory to give a valid signal if the comparison is correct and an invalid signal if it is incorrect.

In another form of the apparatus, the signal from the head represent the numbers of a multi digit number which is split into groups of digits. The operator signal identifies the reference point in the operation of a pseudo random number generator from which cycles of the generator are counted in accordance with the

-3-

groups of digits of the multi digit number. The output after each count of the first four is received in encrypted form, decryption only being carried out when the final output (after the fifth count) is received. The decrypted output represents the first five letters of the card-holders name which may then be compared with the name on the card to give a valid or not valid signal.

In order that the invention may be more clearly understood, one embodiment thereof will now be described by way of example, with reference to the accompanying drawings, in which:-

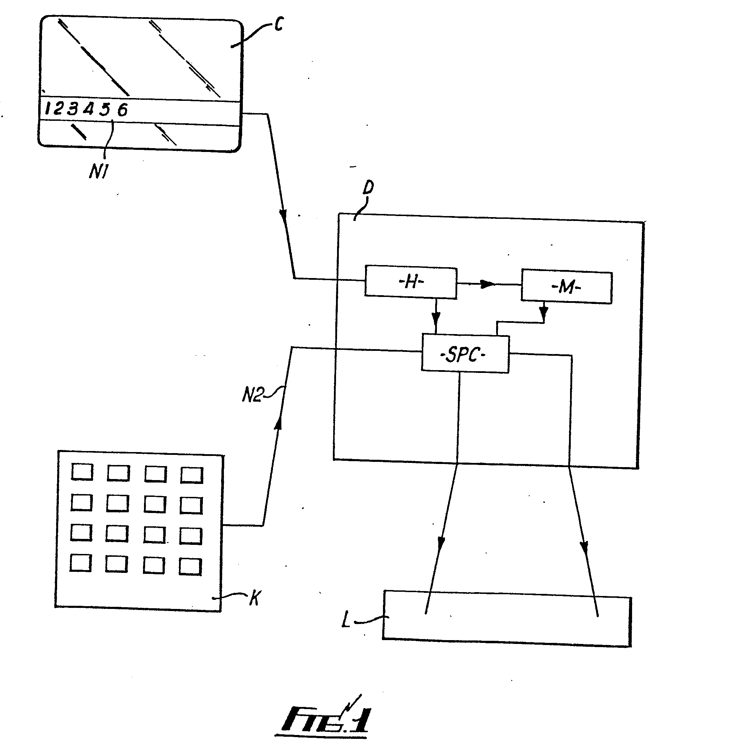

Figure 1 shows a block circuit diagram of one embodiment of the system according to the invention; and

Fi<span>c</span>s. 2 to 6 show respective block circuit diagrams of alternative embodiments to that of Figure 1.

The principle behind the embodiment of Figure 1 is to use an algorithm to generate pairs of numbers which are different but are related to each other through the algorithm. These pairs of numbers when processed by the algorithm will always give the same result. This result may then be compared with a result in memory and, if correct, a valid signal issues. If not correct, a not valid signal issues. In effect, the algorithm acts as a formula to which the pairs of numbers are solutions. A correct solution gives a valid signal and an incorrect solution a not valid signal.

In a card system for cash, goods or services, one number of a pair is stored magnetically on the card, whilst the other number is memorised by the card holder. Although numbers having any number of digits may be employed, having regard to security and the necessity of memorising, four digit numbers are preferred. The algorithm and the valid result are stored in memory in the card reader/writer device. The memory may be static or dynamic. A static memory has the advantage of not losing its contents through failure of the power supply and the potential disadvantage that access may be gained illegally to the memory contents. The memory and associated circuitry could be arranged to reduce this risk. A dynamic memory has the disadvantage that a power supply is necessary to maintain its contents, but the advantage that this feature could be used to automatically erase the contents if the device were tampered with.

The above described system has particular advantage with cards for dispensing relatively low value goods or services. Referring to the drawings, a certain amount of goods/service value is written magnetically on a card C. One of the numbers N1 of a pair is also written magnetically on the card C. The other number of the pair N2, is given confidentially to the card holder. This number is his personal identification number (P.I.N.) The card reader/writer device D contains the algorithm and the valid result in memory M. The device also comprises a magnetic read/write head H, keyboard K, signal processing circuitry SPC and a display L (e.g. a liquid crystal display). To obtain a cup of coffee, say, the card C is inserted into the device D and the P.I.N. keyed in via the keyboard K. These two independent inputs are processed by the signal processing circuitry SPC in accordance with the algorithm in the device D and the result compared with the result in memory M. A correct result will cause a valid display permitting the coffee to be dispensed. The cost of the coffee is then deducted from the cash on the card and an updated total written to the card. If the result is incorrect a not valid signal will be displayed and no coffee will be dispensed. Depending on the type of device a certain number of attempts to obtain the coffee may be permitted after which no further attempt may be made and optionally the card retained by the device.

In the case of low value cash, the bank may write a certain amount of cash on the card. This may be obtained through a cash dispenser using the card in the manner already described.

In both the above cases rather than value (cash, goods or services) being written to the card, transactions may be debited to an account. This avoids the necessity of writing to the card after each transaction, but does of course complicate the accounting system.

It will be appreciated that the above described system provides a secure card based dispenser for low value cash, goods or services transactions. The system requires three independent entries, the two numbers and the algorithm, to enable value to be dispensed. If the card is lost or copied value cannot be obtained because the P.I.N. number is not on the card. Even if both the algorithm and a card were obtained the algorithm would require decoding to enable the other number to be obtained, an effort out of all proportion to the value on the card. Additionally, it would in any event be possible to keep the algorithm secure or at least to ensure that any tampering with the device would immediately be apparent.

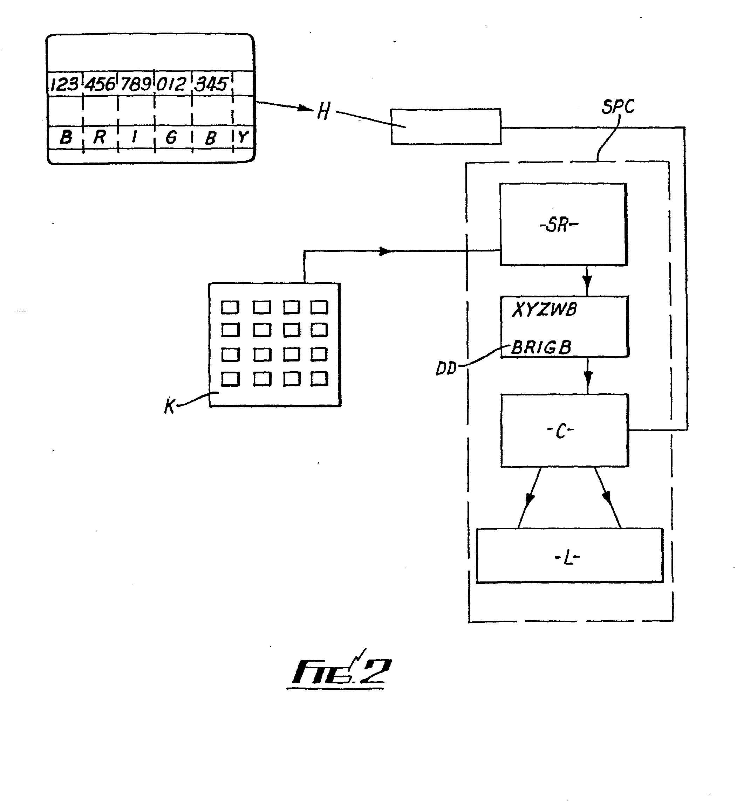

If desired the above described system may be modified to improve the security of the system still further. To this end, referring to Figure 2, a nonlinear shift register SR is incorporated in the device and acts as a pseudo random number generator. In Figure 2 parts equivalent to parts of the Figure 1 embodiment bear the same references. Instead of the card number previously described, a fifteen digit card number is represented magnetically on the card. This fifteen digit number is split into five groups of three digits each. A four digit P.I.N. number associated with, but not written on, the card may be keyed into the read/ write device D as previously through a keyboard K.

The non-linear shift register SR and also a decoding device DD forms part of the signal processing circuitry SPC. The shift register cycles continuously. When the card is inserted and read by the head H and the P.I.N. keyed in via the keyboard K, a number of cycles representing the first group of three digits is counted from a reference point determined by the P.I.N. and an output produced representing the first letter, say, of the card-holders name. This is repeated for each group of three digits. The letter output remain in encoded form until the fifth letter is determined when decoding is carried out thus providing the first five letters of the card-holders name. This may be compared in comparitor C with the first five letters of the name read from the card itself to give, with the correct comparison, a valid signal or, with the incorrect comparison, a not valid signal on display L.

The fifteen digit numbers and the corresponding four digit numbers are generated in pairs by means of a software program known only to the card issuer.

Apart from this, operation of this system is the same as the previously described system.

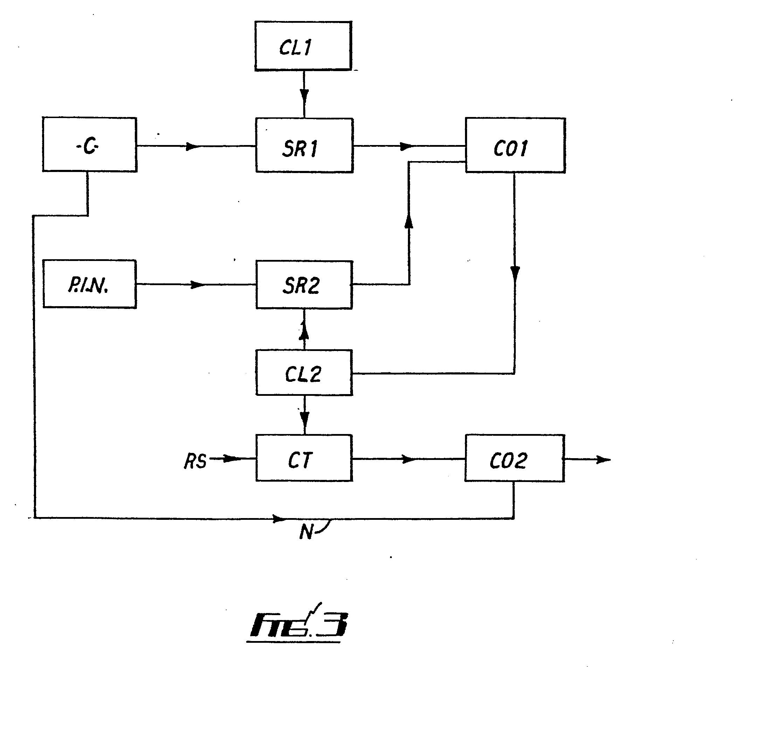

The security of the system may be enhanced still further and four such enhanced security systems are illustrated in Figures 3, 4, 5 and 6. As previously, the card, referenced C on the drawings, bears the users name or other personal information and a series of numbers. The user has a personal identity number (PIN). In principle the card validator uses a secret algorithm which consists of two smaller algorithms (which we call algorithm 1 and algorithm 2) plus a comparator. Algorithm 1 encodes the user's name into a string of bits and then produces from it a sequence of bit strings of length k. (The precise value of k will be determined by the designer.) Similarly algorithm 2 encodes the PIN and produces from it a (different) sequence of bit strings of length k. Each time that the two algorithms produce two k-bit strings, the comparator compares them and a counter, which is initially set at zero, is incremented. If the comparator detects that the two k-bit samples are the same then the value of the counter is recorded and the counter is re-set to zero, providing the counter value is greater than k.

This procedure continues until the series of recorded
numbers is as long as the series of numbers on the
card.   The card is then validated if and only if the two
series of numbers are identical. A specific example
of this security enhanced system is illustrated in the
block circuit diagram of Figure 3.   This circuit comprises
two shift registers SR1 and SR2, respective clocks
CL1 and CL2, two comparators CO1 and CO2 and a counter
CT.

Referring to Figure 3, the PIN is encoded into
binary form and 'seeds' algorithm 2 by determining
the initial state for shift register SR2 with primitive
feedback.   Since the security of the system depends
almost entirely on the secrecy of the feedback coefficients, it is necessary to use a reasonably long register,
in this case 61 stages.   Algorithm 1 is very simple and
does not involve any encryption.   The name is encoded
into binary and determines the contents of shift
register (with no feedback).   Register SR1 has 60
stages.

The first 6 bits of SR1 are loaded into a 6-bit
comparator CO1, the counter CT is set to zero and SR2
is then clocked by CL2.   After each clock the counter

0177325

-10-

is incremented and the last 6 bits of SR2 enter the comparator and are compared with the 6 bits in there. This process is repeated until there is agreement. If the number recorded on the counter is not greater than 6, this agreement is ignored and the process continues. But if the number is greater than 6 then the number is recorded, the counter is re-set to zero through reset R5, the next 6 bits of SR1 replace the existing 6 bits in the comparator and the process is restarted. This continues until 10 values of the counter have been recorded. The card contains the values which these 10 numbers (N) should have and the card is validated if, and only if, the two sets of 10 numbers are identical. To this end, the 10 numbers and the 10 counts are fed to comparator CO2 which issues a card valid signal where there is identity and a not valid signal where there is not.

The sizes of the registers, comparator etc. chosen for this example can, of course, be changed. However if it is decided to change them then care must be taken to ensure that the security is not affected. It is probably wise to ensure that the sizes of the two registers are comparable. If we use a 61 stage register for SR2 then the practical restriction that the size of the comparator is a multiple of 6 indicates that 60 is the best size for SR1.  We could, of course, choose a comparator of size 12 and this would, in fact, probably improve the security.  But it would also increase the validation time for each card.  The choice of the size of the comparator can be made from implementation considerations.

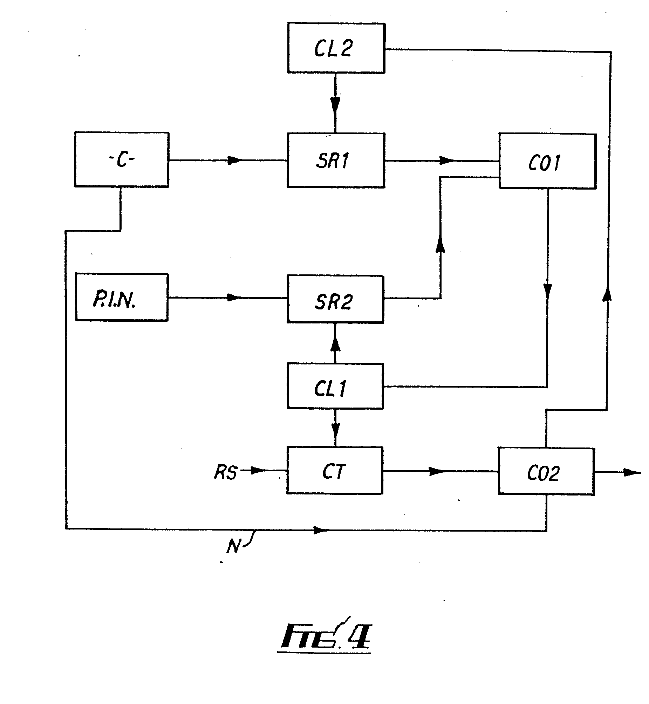

Figure 4 shows a block circuit diagram of a further enhanced security example.  In this example both algorithms involve some genuine encryption.  The register of algorithm 1, which we denote by SR1, has size 29 while that of algorithm 2, denoted by SR2, has length 31.  After being encoded the name provides the initial state for SR1 and the PIN provides the state for SR2.  Both registers have primitive feedbacks.

The counter CT is set at zero and both registers are then clocked by respective clocks CL1 and CL2. After each clock the counter is incremented and the last 6 bits of the two registers are compared by comparator CO1.  This process is repeated until there is agreement.  If the number recorded on the counter is not greater than 6, this agreement is ignored and the process continues.  But if the number is greater than 6 then the number is recorded, the counter  is re-set to zero and the process is restarted.  At all times agreements which occur with numbers less than 7 on the counter are ignored and the registers continue running until 5 values of the counter have been recorded. The card contains the values which these 5 numbers should have. Validation is checked as in the example of Figure 3 with comparator CO2. The card is validated if, and only if, the two sets of 5 numbers are identical. Once again there is the possibility of using different size registers.

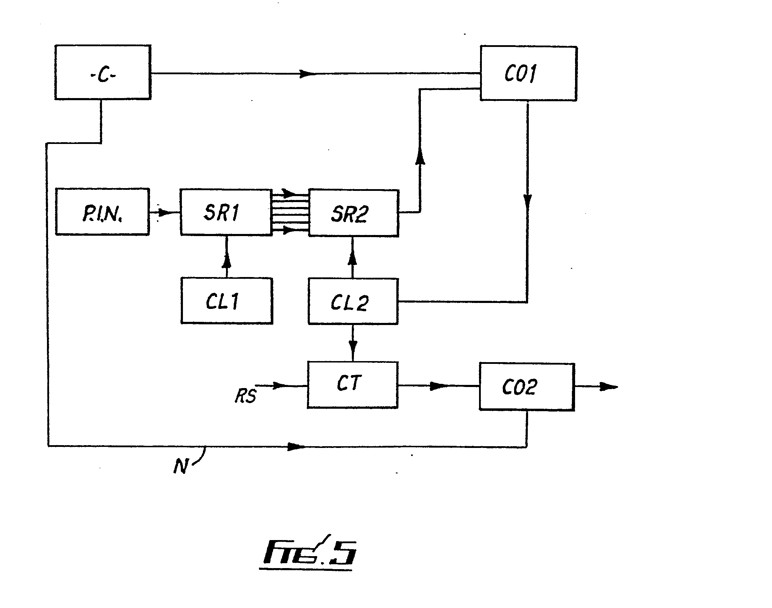

Figure 5 shows a further arrangement in which security is enhanced. Two shift registers are again provided, but this time the registers are in series. Equivalent parts in Figures 3,4,5 and 6 bear the same reference numerals. The personal identity number (PIN) is fed to shift register SR1 to provide the initial state of that register. Shift register SR1 is then clocked a fixed number of times (for example 50) by clock CL1 to provide through its output the initial state of the second shift register SR2. The operation of Figure 5 is then as in the arrangements of Figures 2 and 3 except that one of the inputs to comparator CO1 is the name read directly from the card C in binary. Counts of the counter CT are compared with the number N on the card in the comparator CO2 and a card valid or not valid signal issued as appropriate.

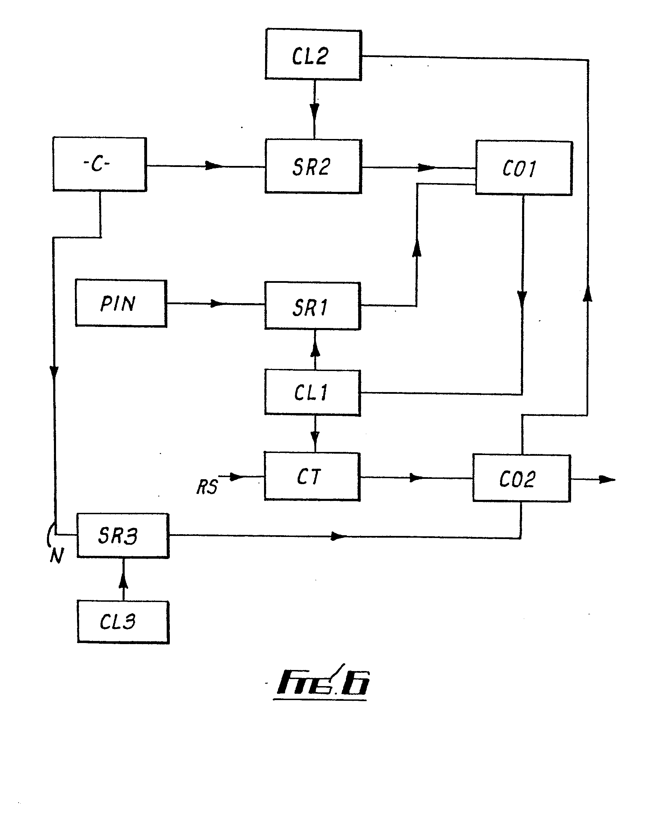

The arrangement of Figure 4 may be further modified by feeding the number N read from the card through a further shift register SR3 with linear feedback (see Figure 6) which is then clocked by clock CL3 a fixed number of times before being fed to the comparator CO2. The number N recorded on the card C is then the encoded number required by SR3 rather than the unencoded number required as one input to the comparator CO2.

The above described embodiments have been described by way of example only and many variations may be made without departing from the scope of the invention. For example, the number of digits in the numbers may be changed, and the comparator of the second embodiment may be dispensed with for a staffed terminal, name comparison then being visually performed by the staff at the terminal. The algorithm may be provided by other than shift registers. For example, D.E.S. (data encryption standard) chips may be used. Also, instead of feeding information by way of a substrate to the terminal, one piece of information may be held and supplied by one individual and another by another individual, the resultant value then being displayed for comparison with a third piece of information held either by one or both of the individuals or by a third source. In a further alternative form, this third piece of information may contain a part held by one individual and a part held by the other. If desired, this third piece of information may be validated by a substrate read by the terminal and held by the appropriate individual.

## CLAIMS

1. A method of operating a device for reading a substrate C to validate the substrate including the steps of reading one of a pair of algorithm related numbers on the substrate by means of a reading head H in the device, keying into the other number of the pairs, processing the two numbers in accordance with the algorithm and comparing the result with the desired result to determine substrate validity.

2. A method of operating a device as claimed in claim 1, in which the desired result is read from the substrate C .

3. A method as claimed in claim 1 or 2, in which the algorithm is provided by one or more shift registers SR , SR1, SR2.

4. A method as claimed in claim 3, in which there are two shift registers SR1, SR2, one of which receives one of the pair of algorithm related numbers and the other of which receives the other number, the output of the shift registers being fed to a comparator CO1.

5. A method as claimed in claim 3, in which there are two shift registers SR1, SR2 connected in series, one of the pairs of algorithm related numbers being fed to the first shift register SR1 which then determines the initial state of the other shift register SR2, the other one of the pair of algorithm related numbers being fed directly to a comparator CO1 to which the output of the other shift register SR2 is fed.

6. A method as claimed in claim 4, in which a third shift register SR3 is provided which provides an encoding step prior to decoding.

7. A device for reading from a substrate comprising a head H, means for processing signals SPC read from or written to the head H and means for enabling K an operator to introduce a signal to the processing means, said means for processing signals SPC being operative to process a signal received from the head H and a signal received from the operator and to produce therefrom a substrate valid or a substrate not valid signal.

8. A device as claimed in claim 7, in which the means for processing signals SPC comprises one or more shift registers SR, SR1, SR2.

9.   A device as claimed in claim 8, in which there are two shift registers SR1, SR2 respectively disposed to receive a signal from the head and from the means for enabling, two clocks CL1, CL2 for clocking respective registers, a first comparator CO1 for comparing the outputs from the shift registers SR1, SR2, a counter CT for counting the number of clocks of one of the registers SR2 and a second comparator CO2 for comparing the output from the counter CT with a further signal N received from the head to produce the valid or invalid signals.

10.   A device as claimed in claim 8, in which there are two shift registers SR1, SR2 connected in series, the first SR1 of which is disposed to receive a signal from one of the head and the means for enabling and the second SR2 of which has its output connected to one input to a first comparator CO1 which has another input adapted to receive a signal from the other of the head and the means for enabling, clocks CL1, CL2 for clocking respective registers, a counter CT for counting the clocks of the clock CL2 connected to the second shift register SR2 and a second comparator CO2 for comparing the output from the counter with a further signal N received from the head to produce the valid or invalid signal.

11.   A device as claimed in claim 9, in which a third shift register SR3 and associated clock CL3 is provided for receiving the further signal from the head and outputting a different signal to the second comparator CO2.

12. A substrate bearing one of a pair of algorithm generated numbers and a further piece of information, the numbers being adapted to produce with the other number of the pair fed from another source off the substrate a signal which may be compared with the further piece of information to produce a substrate valid or not valid signal.

13. A method of operating a device for accepting information from which a validation signal may be produced including the steps of inputting one of a pair of algorithm related numbers from one source into the device, inputting the other number of the pair from another source into the device, processing the two numbers in accordance with the algorithm, and comparing the result with the desired result in order to produce the validation signal.

_FIG.1_

0177325

| 123 | 456 | 789 | 012 | 345 |
|-----|-----|-----|-----|-----|
| B | R | I | G | B | Y |

H

SPC

-SR-

XYZWB

BRIGB

DD

-C-

K

-L-

FIG.2

FIG.3

FIG. 4

0177325

Fig.5

FIG.6